# EUROPEAN PATENT APPLICATION

(11) **EP 4 653 412 A1**
(43) Date of publication of application: **26.11.2025**
(21) Application number: 25178067.2
(22) Date of filing: 21.05.2025
(51) Int. Cl.: C04B 41/45, C04B 41/00, C04B 41/52, C04B 41/89, F01D 5/28, C04B 111/00

(54) **POWDER COMPOSITIONS FOR USE IN PLASMA SPRAYING**

(30) Priority: 24.05.2024 US 202418674760
(71) Applicant: RTX Corporation, Farmington, CT 06032 (US)
(72) Inventor: GAO, Ryan X., Hartford, 06103 (US); GOMEZ, Juan, El Paso, 79902 (US); ZAHED, Nizar B., Glastonbury, 06033 (US); DWIVEDI, Gopal, Woodbury, 11797-1334 (US)
(74) Representative: Dehns

(57) **Abstract**

A powder composition is described for use in the preparation of an environmental barrier coating or an abradable coatings. The particles (100) of the powder composition possess an internal porosity (60, 70) and are prepared by spray drying feed particles (50) to form agglomerated particles (100). The agglomerated particle (100) may further contain dislocator material (80) and/or pore forming material (80).

## Description

### FIELD OF THE INVENTION

The present disclosure relates generally to coatings and methods of preparation of such coatings. In particular, the present disclosure concerns powders for use in the preparation of coatings, particularly environmental barrier coatings (EBCs) and abradable coatings, for ceramic matrix composite materials (CMCs).

### BACKGROUND OF THE INVENTION

Gas turbine engines, in general, include a fan section, a compressor section, a combustion chamber, and a turbine section. Air enters through the fan section and is compressed in the compressor section before being introduced into the combustion section. In the combustion section, the air is mixed with fuel and ignited to generate a high-energy, high temperature gas flow. The high-energy, high temperature gas flow is expanded in the turbine section which is used to create thrust and to drive the compressor and fan sections.

Thus, turbomachinery, such as gas turbine engines, have components that are exposed to hostile environments due high temperatures. Such components can include a substrate made from ceramic matrix materials (CMCs) which have the capability of withstanding high temperatures. These CMC components can be provided with environmental barrier coatings (EBCs) applied to the surface of the substrate to protect the substrate from corrosive forces due to, for example, exposure to high temperature water vapor.

To limit infiltration of corrosive gases, for example, high temperature water vapor, it is desirable for the EBC coating system to be dense, i.e., exhibit low porosity in order to minimize vaper permeability.

In addition to EBCs, another type of coating that can be used in turbomachinery are abradable coatings. Such abradable coatings are provided on surfaces of components, e.g., seals, that may come into contact (rub interaction) with moving parts of the engine, for example, blades.

For example, the turbine sections of gas turbine engines include low and high pressure turbines having a plurality of turbine blades. The turbine section further includes a blade outer air seal (BOAS) to prevent/minimize leakage of the high-energy, high temperature gas flow, i.e., the working fluid, around the blade tips as it flows through the turbine section. Avoiding/minimizing such leakage increases the overall operating efficiency of the gas turbine engine.

Components that are in close proximity to rotating blades, such as BOAS as mentioned above, can come into contact with the blade tips during operation. To avoid blade damage, which can lead to serious damage to the engine, abradable coatings are provided so that when rub interaction occurs between the blade and, for example, a seal, the damage is absorbed by the coating, and not the blade. These abradable coatings are designed so that the blade tips act as an abrading component with respect to the abradable coating.

The abradability of such coatings can be achieved through porosity. The inclusion of pores in the coating weakens the mechanical strength of the coating allowing the coating to abrade when rub interaction occurs with, for example, turbine blades. Thermal spraying itself can introduce same amount of porosity. Additionally, materials such as dislocators and pore forming agents can be included in the coating to enhance abradability. The inclusion of such additional materials can involve combining different powder materials to produce a blend composition that can then be used to create the coating by thermal spraying. Such blending procedures add costs and complexity to the preparation of such coatings.

There exists a continuing to need for materials, methods, and techniques for producing dense EBCs and abradable coatings that can enhance the properties of such coatings and/or facilitate the manufacture thereof.

### SUMMARY OF THE INVENTION

In general, the present disclosure relates to powder compositions useful in the preparation of EBCs and abradable coatings by thermal spraying such as air plasma spraying. In particular, the present disclosure relates to preparing powder compositions wherein the powder particles are provided with an internal porosity.

According to an aspect of the present disclosure, there is provided a powder composition for use in preparing an environmental barrier coating or an abradable coating comprising:
a powder composition containing agglomerated powder particles having an overall particle size of 10 to 150 µm, for example, 10 to 100 µm, wherein the powder composition of agglomerated particles has 10% to 50% of the apparent density of a corresponding powder composition of solid particles.

According to another aspect of the present disclosure, there is provided a method of preparing environmental barrier coating or an abradable coating comprising:
spray drying feed particles having a particle size of 0.1 to 20 µm, for example 1 to 10 µm or 0.5 to 5 µm, to form a powder composition of agglomerated particles having a particle size of 1 to 200 µm, for example 10 to 150 µm or 10 to 100 µm, wherein the powder composition of agglomerated particles has 10% to 50% of the apparent density of a corresponding powder composition of solid particles; and
applying a coating to a substrate by thermally spraying a powder composition comprising these agglomerated particles.

According to another aspect of the present disclosure, there is provided a coated article, for example, a BOAS, comprising:
a ceramic matrix composite substrate and a coating system;
wherein the coating system comprises a coating formed by thermally spraying a powder composition comprising agglomerated particles having a particle size of 10 to 150 µm, for example, 10 to 100 µm, wherein the powder composition of agglomerated particles has 10% to 50% of the apparent density of a corresponding powder composition of solid particles.

In further examples of the present disclosure, including further examples of the above, the agglomerated particles comprise material selected from hafnium silicate, zirconium silicate, rare earth silicates, rare earth phosphates, aluminosilicates, or HfO₂-SiO₂-rare earth oxide, which in each case may be stoichiometric or non-stoichiometric, and combinations thereof (for example, silica-rich Hf silicate, HfSiO₄, a silica-rich Zr-silicate, ZrSiO₄, a rare earth monosilicate (RE₂SiO₅), a rare earth disilicate (RE₂Si₂O₇), a rare earth phosphate (REPO₄), mullite, anorthite, sodium aluminosilicate, or any combination thereof, wherein RE is Sc, Y, La, Ce, Pr, Nd, Pm, Sm, Eu, Gd, Tb, Dy, Ho, Er, Tm, Yb, or Lu).

In further examples of the present disclosure, including further examples of the above, the agglomerated particles themselves comprise a mixture of one or more rare earth disilicates (RE₂Si₂O₇), e.g., YbSiₛO₇, and hafnon (HfSiO₄), or a mixture of one or more rare earth disilicates (RE₂Si₂O₇), hafnon (HfSiO₄), and zircon (ZrSiO₄), wherein RE is Sc, Y, La, Ce, Pr, Nd, Pm, Sm, Eu, Gd, Tb, Dy, Ho, Er, Tm, Yb, or Lu, which in each case the mixture may be stoichiometric or non-stoichiometric.

In further examples of the present disclosure, including further examples of the above, the agglomerated particles themselves comprise a mixture of 50% - 90% rare earth disilicates (RE₂SiₛO₇) and 10% - 50% hafnon (HfSiO₄) or 10% - 50% of a mixture of one or more rare hafnon (HfSiO₄) and zircon (ZrSiO₄).

In further examples of the present disclosure, including further examples of the above, the powder composition comprises a blend of first agglomerated particles and second agglomerated particles, wherein the first agglomerated particles have a different composition than the second agglomerated particles, and wherein both the first and second agglomerated particles are agglomerated particles comprising material selected from hafnium silicate, zirconium silicate, rare earth silicates, rare earth phosphates, aluminosilicates, or HfO₂-SiO₂-rare earth oxide, which in each case may be stoichiometric or non-stoichiometric, and combinations thereof (for example, silica-rich Hf silicate, HfSiO₄, a silica-rich Zr-silicate, ZrSiO₄, a rare earth monosilicate (RE₂SiO₅), a rare earth disilicate (RE₂Si₂O₇), a rare earth phosphate (REPO₄), mullite, anorthite, sodium aluminosilicate, or any combination thereof, wherein RE is Sc, Y, La, Ce, Pr, Nd, Pm, Sm, Eu, Gd, Tb, Dy, Ho, Er, Tm, Yb, or Lu).

In further examples of the present disclosure, including further examples of the above, the powder composition comprises a blend of first agglomerated particles and second agglomerated particles, wherein the first agglomerated particles have a different composition than the second agglomerated particles, and wherein both the first and second agglomerated particles are agglomerated particles comprising material selected from one or more rare earth disilicates (RE₂Si₂O₇), e.g. YbSi₂O₇, hafnon (HfSiO₄), and mixtures of hafnon (HfSiO₄) and zircon (ZrSiO₄).

In further examples of the present disclosure, including further examples of the above, the blend comprises a mixture of 50% - 90% rare earth disilicates (RE₂Si₂O₇) agglomerated particles and either 10% - 50% hafnon (HfSiO₄) agglomerated particles or 10% - 50% of a mixture of hafnon (HfSiO₄) and zircon (ZrSiO₄) agglomerated particles.

In further examples of the present disclosure, including further examples of the above, the agglomerated particles comprise a material selected from rare earth monosilicates (RE₂SiO₅), rare earth disilicates (RE₂Si₂O₇), rare earth phosphates (REPO₄), or any combination thereof, wherein RE is Sc, Y, La, Ce, Pr, Nd, Pm, Sm, Eu, Gd, Tb, Dy, Ho, Er, Tm, Yb, or Lu.

In further examples of the present disclosure, including further examples of the above, the powder particles comprise a dislocator material.

In further examples of the present disclosure, including further examples of the above, the powder particles comprise a dislocator material selected from aluminosilicates (e.g., mullite, anorthite), hexagonal boron nitride (hBN), alkaline earth (M) tungstates (MWO₄), alkaline earth molybdates (MMoO₄), rare earth phosphates (REPO₄), and combinations thereof, wherein M is Mg, Ca, Sr, or Ba, and RE is Sc, Y, La, Ce, Pr, Nd, Pm, Sm, Eu, Gd, Tb, Dy, Ho, Er, Tm, Yb, or Lu, for example, CaWO₄, BaWO₄, ZnWO₄, BaMoO₄, SrMoO₄, YPO₄, or LaPO₄.

In further examples of the present disclosure, including further examples of the above, the powder particles comprise a pore forming material, for example, a polymer such as a pore forming material selected from polyesters and polymethylmethacrylates.

In further examples of the present disclosure, including further examples of the above, the substrate to which the abradable coating is applied is a ceramic matrix composite (CMC) substrate such as a SiC/SiC or C/SiC CMC.

### BRIEF DESCRIPTION OF FIGURES

The features of the disclosure believed to be novel and the elements characteristic of the invention are set forth with particularity in the appended claims. Implementations of the inventive concepts disclosed herein may be better understood when consideration is given to the following description of the figures. The figures are for illustration purposes only and are not drawn to scale. These drawings are not necessarily to scale, and which some features may be exaggerated and some features may be omitted or may be represented schematically in the interest of clarity. Like reference numerals in the drawings may represent and refer to the same or similar element, feature, or function. The disclosure itself, however, both as to organization and method of operation, can best be understood by reference to the description of the preferred embodiment(s) which follows, taken in conjunction with the accompanying drawings in which:
Fig. 1 schematically illustrates an example of a coating system on a CMC substrate.
Fig. 2 schematically illustrates an agglomerated particle in accordance with the present disclosure.
Fig. 3 schematically illustrates a cross section of an EBC coating layer with agglomerated particle in accordance with the present disclosure.
Fig. 4 schematically illustrates a cross section of an abradable coating containing a matrix material, a dislocator material, and a porosity former material.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

As noted above, EBCs are coatings that can be applied to CMC substrates to protect the CMC from harsh environments experienced within gas turbine engines, e.g., exposure to corrosive forces such as high temperature water vapor. Therefore, it is desirable for the EBC to be dense and have low vapor permeability. For this reason, normally it would be undesirable to introduce porosity into the coating.

However, the agglomerated particles in accordance with the disclosure exhibit an internal porosity which in general does not introduce an interconnecting porosity throughout the coating. Thus, while the agglomerated particles exhibit an internal porosity, their use in forming an EBC coating does not create a substantial interconnecting porosity that would facilitate penetration of damaging vapors.

Moreover, the internal porosity of the agglomerated particles in the EBC coating reduces the thermal conductivity of the EBC. Therefore, the agglomerated particles with internal porosity can provide the EBC with thermal barrier characteristics thereby providing further protection for the underlying CMC substrate.

On the other hand, porosity can be advantageous for abradable coatings as porosity can weaken the strength of the of the coating enhancing abradability. Beyond the coating itself having a porosity due to interstitial spacing between, using particles which themselves exhibit an internal porosity to form the coating further reduces the strength of the microstructure and thereby beneficially impact abradability.

In producing EBCs and abradable coatings by spraying it is desirable to use powder compositions in which the particles predominantly (e.g., greater than 80% or greater than 90% or greater than 95%) exhibit a nominal diameter within the range of 10 to 150 µm. For abradable coatings the actual particles sizes can vary widely within this range as the variety in particle size enhances formation interstitial spacing. Conversely, for EBC coatings, it is desirable for a significant portion of the particles to be within one or more narrow ranges, for example, 50 to 75 µm to achieve a dense coating.

Particle size distribution can be characterized in terms of D-values. For example, a D5 value of 10 µm means that 5% of the particles in the sample have a diameter less than 10 µm, whereas a D90 of 100 µm means that 90% of the particles in the sample have a diameter less than 100 µm.

For producing EBCs by thermal spraying, the powder composition can have, for example, a D5 value 5 µm, a D50 value of 20-50 µm, and a D90 value of 40-90 µm. For producing abradable coatings by thermal spraying, the powder composition can have, for example, a D5 value 5 µm, a D50 value of 40-100 µm, and a D90 value of 90-180 µm. Particle size distributions can be measured by several techniques, for example, the uses of sieves or by laser diffraction (see, e.g., ASTM E3340-22 (2022)).

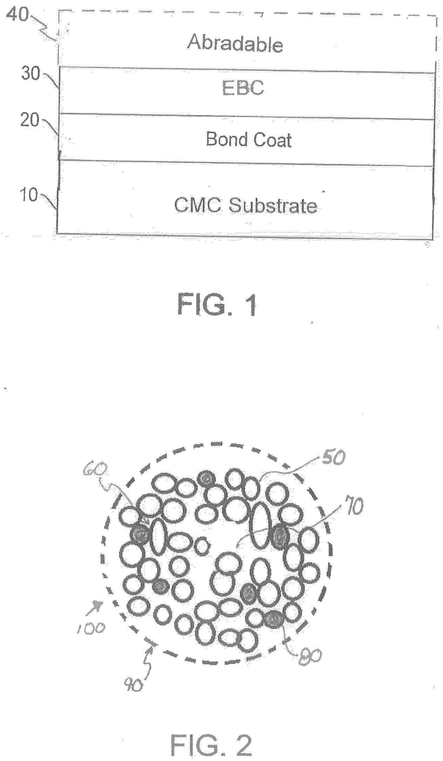

Fig. 1 schematically illustrates a coating system on a CMC substrate 10, for example, a an SiC/SiC or C/SiC CMC. In this embodiment, the substrate 10 is initially coated with a bond coat 20 for enhancing adhesion between the substrate and the EBC layer 30. The EBC layer 30 can provide protection for the CMC substrate 10 from exposure to corrosive forces such as high temperature water vapor. Thereafter, in situations where rub interaction make occur between the component and a moving component, such as a turbine blade, an abradable coating 40 can be applied to prevent damage to the moving component as a result of the rub interaction.

To introduce internal porosity into particles that are to be used for forming EBCs and abradable coatings, small feed particles, for example, particles having a particle size of 0.1 to 20 µm, for example, 1 to 10 µm or 0.5 to 5 µm, are subjected to a spray drying process wherein the particles undergo agglomeration to form a powder composition of agglomerated particles having a particle size of 1 to 200 µm, for example 10 to 150 µm or 10 to 100 µm wherein the powder composition of agglomerated particles has 10% to 50% of the apparent density of a corresponding powder composition of solid particles (i.e., particles of the same material but without an internal porosity). The resultant particles can exhibit mircopores of, for example, 1 to 10 µm in diameter and larger pores up to 100 µm, e.g., 80 to 100 µm. In addition, the agglomerated particles can even take the form of hollow particles, e.g., a shell of agglomerated particles surrounding a hollow interior.

Apparent density can be measured by, for example, by ASTM B212-21 (2021).

Suitable spray drying apparatus for preparing the agglomerated particles are commercially available. See, for example, spray drying equipment available from Yamato Scientific America, such as the Yamato DL410 large capacity spray dryer.

Fig. 2 schematically illustrates an agglomerated particle 100 prepared in accordance with the disclosed process. The particle 100 is an agglomeration of the smaller feed particles 50 and exhibits a porosity which can include small pores 60 (e.g., a microporosity) and larger pores 70 (e.g., a macroporosity). In this embodiment, the agglomerated particle 100 also exhibits an additional agent 80 (dislocator or pore forming material) which can be present when preparing abradable coatings. The agglomerated particle 100 may also have a shell or cladding 90 made of, for example, a dislocator or pore forming material.

The feed particles include the material which will form the particles that will in turn be used to prepare the EBC or abradable coating. For an EBC, these materials are, for example, selected from hafnium silicate, zirconium silicate, rare earth silicates, rare earth phosphates, aluminosilicates, or HfO₂-SiO₂-rare earth oxide, which in each case may be stoichiometric or non-stoichiometric, and combinations thereof (such as, silica-rich Hf silicate, HfSiO₄, a silica-rich Zr-silicate, ZrSiO₄, a rare earth monosilicate (RE₂SiO₅), a rare earth disilicate (RE₂Si₂O₇), a rare earth phosphate (REPO₄) powder, mullite, anorthite, sodium aluminosilicate, or any combination thereof, wherein RE is Sc, Y, La, Ce, Pr, Nd, Pm, Sm, Eu, Gd, Tb, Dy, Ho, Er, Tm, Yb, or Lu).

For an abradable coating, these materials for the feed particles are, for example, selected from hafnium silicate, zirconium silicate, rare earth silicates, rare earth phosphates, aluminosilicates, or HfO₂-SiO₂-rare earth oxide, which in each case may be stoichiometric or non-stoichiometric, and combinations thereof (for example, silica-rich Hf silicate, HfSiO₄, a silica-rich Zr-silicate, ZrSiO₄, a rare earth monosilicate (RE₂SiO₅), a rare earth disilicate (RE₂Si₂O₇), a rare earth phosphate (REPO₄) powder, mullite, anorthite, sodium aluminosilicate, or any combination thereof, wherein RE is Sc, Y, La, Ce, Pr, Nd, Pm, Sm, Eu, Gd, Tb, Dy, Ho, Er, Tm, Yb, or Lu). Additionally, the feed particles for abradable coatings can be a hafnia or zirconia stabilized (partially or fully) by the addition of another component, for example, stabilized by an alkaline or rare earth metal), such as yttrium-stabilized-zirconia (Y₂O₃-stabilized ZrO₂), magnesium-stabilized-zirconia, calcium-stabilized-zirconia, cerium-stabilized-zirconia, or combinations thereof.

The feed particles can be made of mixtures so that the resultant agglomerated particles are mixtures of two or more materials. For example, for abradable coatings, the feed particles may be a mixture of rare earth disilicates and hafnon, a mixture hafnon and zircon, or a mixture of rare earth monosilicates and rare earth disilicates. For EBC coatings, the powder particles can be made of a mixture of one or more rare earth disilicates (RE₂ Si₂O₇), e.g., YbSi₂O₇, and hafnon (HfSiO₄), or a mixture of one or more rare earth disilicates (RE₂ Si₂O₇), hafnon (HfSiₛO₄), and zircon (Zr SiO₄), wherein RE is Sc, Y, La, Ce, Pr, Nd, Pm, Sm, Eu, Gd, Tb, Dy, Ho, Er, Tm, Yb, or Lu. For example, the powder particles can contain a mixture of 50% - 90% rare earth disilicates (RE₂ Si₂O₇) and 10% - 50% hafnon (HfSiO₄) or 10% - 50% of a mixture of one or more rare hafnon (HfSiO₄) and zircon (Zr SiO₄).

In addition, in the case of powder compositions for abradable coatings, the feed particles can include other agents such as dislocator materials or pore forming materials. Dislocator materials impact the internal mechanical strength of the coating. The dislocator material may, for example, provide a mechanical mismatch with the matrix material enhancing abradability within the matrix or along the dislocator/matrix interfaces, or may have a lower shear strength than the matrix and thereby aid abradability through deformation within the dislocator phase and along the dislocator/matrix interfaces. The pore forming agents are incorporated into the abradable coatings during spraying and are then subsequently removed by heating.

The choice of dislocator material will depend on the matrix material of the abradable coating. Dislocator materials can be selected from aluminosilicates (e.g., mullite, anorthite), hexagonal boron nitride (hBN), alkaline earth tungstate (MWO₄), alkaline earth molybdates (MMoO₄), rare earth phosphates (REPO₄), and combinations thereof, wherein M is Mg, Ca, Sr, or Ba, and RE is Sc, Y, La, Ce, Pr, Nd, Pm, Sm, Eu, Gd, Tb, Dy, Ho, Er, Tm, Yb, or Lu, such as, CaWO₄, BaWO₄, ZnWO₄, BaMoO₄, SrMoO₄, YPO₄, or LaPO₄.

Pore forming materials can be, for example, a polymer such as a polyester or a polymethylmethacrylate.

Following the agglomeration process, the agglomerated particles can be sieved/screened to achieve a desired particle size range. Additionally, the agglomerated particles, with or without sieving/screening, can be further treated to modify the morphology thereof.

For example, the agglomerated particles can be subjected to a heat treatment such as sintering in order to aid in fusing the smaller particles into the agglomerates and/or to densify the agglomerated particles by reducing the amount of internal porosity, thus changing the morphology of the agglomerated particles. The sintering temperature will depend on the material of the agglomerated particles but will be below the melting temperature thereof. The heat treatment can be achieved by heating treating the agglomerated particles in a thermal or microwave furnace or by flowing the agglomerated particles through, for example, the flame from a plasma torch.

Additionally, the agglomerated particles can first be sintered and then passed through a plasma spray torch. Such a process will change the morphology of the agglomerated particles by smoothening the surface of the particles and improving spheroidicity of the particles.

Depending on the materials of the feed particles, the agglomeration may result in relatively large agglomerates. In order to obtain a powder with a desirable particle size distribution for thermal spraying (as described above), the large agglomerates can be first subjected to a sintering process, and then be subjected to a crushing step to reduce the particle size. Such sintering and crushing will thus modify the morphology of the agglomerated particles.

To increase abradability of the coatings, the agglomeration process can involve the introduction of further materials such as dislocators and/or pore forming agents which are then incorporated into the powder particles.

Dislocator particles form a dislocator phase within the matrix phase. This dislocator phase impacts the internal mechanical strength of the coating. For example, the dislocator material may provide a mechanical mismatch with the matrix material enhancing abradability within the matrix or along the dislocator/matrix interfaces, or may have a lower shear strength than the matrix and thereby aid abradability through deformation within the dislocator phase and along the dislocator/matrix interfaces.

The dislocator material can be selected from alkaline earth tungstate (MWO₄), alkaline earth molybdates (MMoO₄), rare earth phosphates (REPO₄), and combinations thereof, wherein M is Mg, Ca, Sr, or Ba, and RE is Sc, Y, La, Ce, Pr, Nd, Pm, Sm, Eu, Gd, Tb, Dy, Ho, Er, Tm, Yb, or Lu, such as, CaWO₄, BaWO₄, ZnWO₄, BaMoO₄, SrMoO₄, YPO₄, or LaPO₄.

The amount of dislocator material can vary widely and depends on, for example, the desired porosity and/or strength of the final coating. For example, the resultant abradable coating can have a dislocator material content of up to 60 vol.%, such as 30 to 60 vol.% or 20 to 40 vol.%.

Pore forming agents are particles of fugitive material. The pore forming agents are incorporated into the abradable coating and then are subsequently removed by a heat treatment that causes the fugitive material to melt or burn. The increase in porosity achieved through the use of such pore forming materials increases abradability of the coating. Suitable pore forming material are, for example, polymers such as polyesters and polymethylmethacrylates.

The amount of pore forming material can also vary widely and will depend on, for example, the desired porosity and/or strength of the final coating. For example, the resultant abradable coating can have a pore forming material content of up to 40 vol.%, such as 20 to 40 vol.%.

The pore forming materials can be used alone or in conjunction with dislocator materials. When used in conjunction with dislocator materials, the content of pore forming material can be, for example, up to 20 vol.% and the content of the dislocator material can be, for example, up to 30 vol.%.

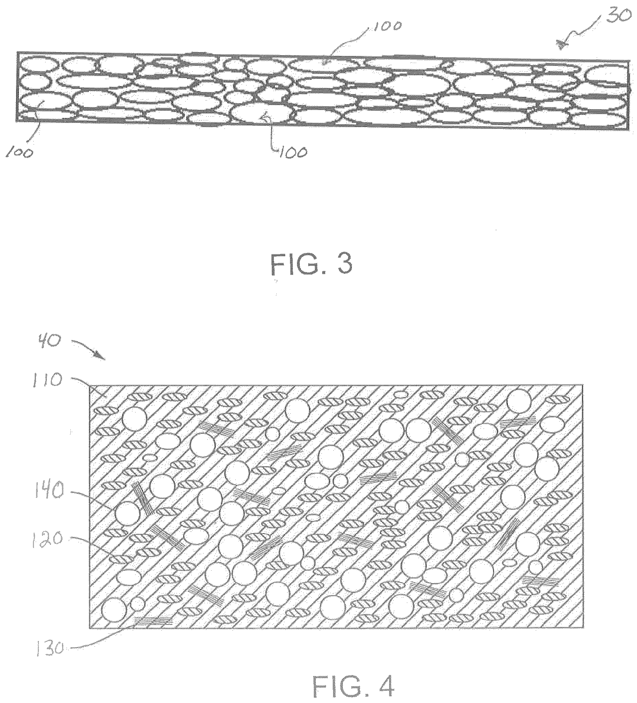

Fig. 3 schematically shows an EBC coating layer 30 made of agglomerated particles 100 with internal porosity in accordance with the disclosure (the internal porosity is not shown in Fig. 3). Due to the internal porosity of the particles, the EBC coating layer 30 exhibits a low thermal conductivity. Thus, the internal porosity of the particles provides the EBC coating layer 30 with thermal barrier characteristics. The environmental protective properties of the EBC coating layer 30 can be adjusted by adjusting the internal porosity of the agglomerated particles 100. For example, the microporosity of the agglomerated particles 100 can be reduced after agglomeration by sintering the particles.

Fig. 4 shows a cross section of an abradable coating 40. As shown in Fig. 4, the coating contains matrix material 110, for example, ytterbium disilicate (Yb₂Si₂O₇). This matrix is made from of the agglomerated particles (the internal porosity of the agglomerated particles is not shown in Fig. 4). Dispersed in the matrix 110 is a dislocator material 120, for example, calcium tungstate (CaWO₄). Also dispersed in the matrix material 110 are particles of pore forming material 130. In this embodiment, the matrix material also exhibits pores 140.

The resultant powder composition can be used to form an abradable coating on a substrate, for example, a CMC substrate, such as a Si/Si of C/SiC CMC. As noted above, EBCs and abradable coatings can be applied to substrates by thermal spraying such as plasma spraying (e.g., atmospheric plasma spraying (APS), vacuum plasma spraying (VPS), low pressure plasma spraying (LPPS), shrouded plasma spraying, and suspension plasma spraying (SPS)).

In plasma spraying, the powder composition is injected into a plasma jet/flame generated by a plasma torch or gun, and the heated particles are deposited onto a substrate in the form of flattened particles (e.g., platelets) referred to as splats. Such thermal spraying techniques can be used to apply an EBC or an abradable coating to a CMC component of a gas turbine engine, for example, a BOAS component.

The powder compositions used in the thermal spraying can be made of the agglomerated particles as discussed above. As mentioned, the particles themselves can made of a combination of materials. Additionally, the powder combination can be a blend of two or more types of agglomerated particles, for example, a blend of agglomerated rare earth disilicates particles and agglomerated hafnon or hafnon/zircon particles.

Additionally, the powder composition used in the thermal spraying can be a blend of agglomerated particles and non-agglomerated particles. For example, for an abradable coatings, the powder composition can be a blend of agglomerated particles for making the matrix of the coating (e.g., a hafnium silicate or zirconium silicate) and particles of dislocator and/or pore forming materials.

Further, with regards to abradable coatings, the agglomerated particles can be coated with a further material to form a core and shell structure. For example, the agglomerated particles (which themselves may be made of combination of materials) can be coated with either a layer of dislocator material or pore forming material. The coating process can involve combining the materials in a mixing apparatus and drying the resultant particles in a dryer, for example, using a vacuum dryer such as those available from Eirich Machines.

EBCs typically have a thickness of up to 1,000 µm, for example, 25 to 1,000 µm, 25 to 50 µm, or 50 to 200 µm. Abradable coatings are applied to CMC substrates to prevent damage to moving parts, like turbine blades, that may come into contact with a CMC component (e.g., a BOAS) during operation of a gas turbine engine. The abradable coatings can be applied in a variety of thicknesses. Abradable coatings can have a thickness of, for example, 150 µm to 1500 µm, such as 150 to 750 µm.

The corresponding structures, material, acts, and equivalents of all means or steps plus function elements in the claims below are intended to include any structure, material, or act for performing the function in combination with other claimed elements are specifically claimed. The above description of the present invention has been presented for purposes of illustration and description, but is not intended to be exhaustive or limited to the invention in the form disclosed. Many modifications and variations will be apparent to those of ordinary skill without departing from the scope and spirit of the invention. The specific embodiment(s) described above were chosen and described in order to explain principles of the invention and the practical applications thereof, and to enable others of ordinary skill in the art to understand the invention for embodiments with various modifications as are suited to the particular use contemplated.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A powder composition for use in thermal spraying comprising:
agglomerated particles (100) having an overall particle size of 10 to 150 µm, wherein the powder composition of agglomerated particles (100) has 10% to 50% of the apparent density of a corresponding powder composition of solid particles.

2. The composition according to claim 1, wherein the agglomerated particles (100) comprise material selected from hafnium silicate, zirconium silicate, rare earth silicates, rare earth phosphates, aluminosilicates, or HfO₂-SiO₂-rare earth oxide, which in each case may be stoichiometric or non-stoichiometric, and combinations thereof.

3. The composition according to claim 1, wherein said agglomerated particles (100) comprise a mixture of one or more rare earth disilicates (RE₂Si₂O₇) and hafnon (HfSiO₄), or a mixture of one or more rare earth disilicates (RE₂Si₂O₇), hafnon (HfSiO₄), and Zircon (ZrSiO₄), wherein RE is Sc, Y, La, Ce, Pr, Nd, Pm, Sm, Eu, Gd, Tb, Dy, Ho, Er, Tm, Yb, or Lu.

4. The composition according to claim 2, wherein said agglomerated particles (100) comprise a mixture of 50% - 90% rare earth disilicates (RE₂ SiₛO₇), and 10% - 50% hafnon (HfSiO₄) or 10% - 50% of a mixture of one or more rare hafnon (HfSiO₄) and zircon (ZrSiO₄).

5. The composition according to claim 1, wherein said agglomerated particles (100) comprise a material selected from rare earth monosilicates (RE₂SiO₅), rare earth disilicates (RE₂Si₂O₇), rare earth phosphates (REPO₄), or any combination thereof, wherein RE is Sc, Y, La, Ce, Pr, Nd, Pm, Sm, Eu, Gd, Tb, Dy, Ho, Er, Tm, Yb, or Lu.

6. The composition according to claim 5, wherein said agglomerated particles (100) further comprise a dislocator material (80; 120), optionally wherein said dislocator material (80; 120) is selected from alkaline earth (M) tungstates (MWO₄), alkaline earth molybdates (MMoO₄), rare earth (RE) phosphates (REPO₄), and combinations thereof, wherein M is Mg, Ca, Sr, or Ba, and RE is Sc, Y, La, Ce, Pr, Nd, Pm, Sm, Eu, Gd, Tb, Dy, Ho, Er, Tm, Yb, or Lu.

7. The composition according to any preceding claim, wherein said agglomerated particles (100) further contain a pore forming material (80; 130).

8. A method of preparing environmental barrier coating (30) or an abradable coating (40) comprising:
spray drying feed particles (50) having a particle size of 0.1 to 20 µm, to form a powder composition comprising agglomerated particles (100) having a particle size of 1 to 200 µm, wherein the powder composition of agglomerated particles (100) has 10% to 50% of the apparent density of a corresponding powder composition of solid particles; and
applying a coating (20, 30, 40) to a substrate (10) by thermally spraying the powder composition comprising said agglomerated particles (100).

9. The method according to claim 8, wherein:
the material of said feed particles (50) is selected from a hafnium silicate, zirconium silicate, rare earth silicates, rare earth phosphates, aluminosilicates, or HfO₂-SiO₂-rare earth oxide, which in each case may be stoichiometric or non-stoichiometric, and combinations thereof; or
the material of said feed particles (50) is a mixture of one or more rare earth disilicates (RE₂Si₂O₇) and hafnon (HfSiO₄), or a mixture of one or more rare earth disilicates (RE₂Si₂O₇), hafnon (HfSiO₄), and zircon (ZrSiO₄), wherein RE is Sc, Y, La, Ce, Pr, Nd, Pm, Sm, Eu, Gd, Tb, Dy, Ho, Er, Tm, Yb, or Lu.

10. The method according to claim 8 or 9, wherein the material of said feed particles (50) is a mixture of 50% - 90% rare earth disilicates (RE₂ SiₛO₇), and 10% - 50% hafnon (HfSiO₄) or 10% - 50% of a mixture of one or more rare hafnon (HfSiO₄) and zircon (ZrSiO₄).

11. The method according to any of claims 8 to 10, wherein said feed particles (50) are spray dried in the presence of particles of a dislocator material (80; 120), optionally wherein said dislocator material (80; 120) is selected from alkaline earth (M) tungstates (MWO₄), alkaline earth molybdates (MMoO₄), rare earth (RE) phosphates (REPO₄), and combinations thereof, wherein M is Mg, Ca, Sr, or Ba, and RE is Sc, Y, La, Ce, Pr, Nd, Pm, Sm, Eu, Gd, Tb, Dy, Ho, Er, Tm, Yb, or Lu.

12. The method according to any of claims 8 to 11, wherein feed particles (50) are spray dried in the presence of particles of a pore forming material (80; 130).

13. A coated article comprising:
a ceramic matrix composite substrate (10) and a coating system (20, 30, 40);
wherein the coating system (20, 30, 40) comprises a coating (20, 30) formed by thermally spraying a powder composition comprising agglomerated particles (100) having a particle size of 10 to 150 µm, wherein the powder composition of agglomerated particles (100) has 10% to 50% of the apparent density of a corresponding powder composition of solid particles.

14. The coated article according to claim 13, wherein:
the agglomerated particles (100) comprise material selected from hafnium silicate, zirconium silicate, rare earth silicates, rare earth phosphates, aluminosilicates, or HfO₂-SiO₂-rare earth oxide, which in each case may be stoichiometric or non-stoichiometric, and combinations thereof; or
said agglomerated particles (100) comprise a mixture of one or more rare earth disilicates (RE₂Si₂O₇) and hafnon (HfSiO₄), or a mixture of one or more rare earth disilicates (RE₂Si₂O₇), hafnon (HfSiO₄), and Zircon (ZrSiO₄), wherein RE is Sc, Y, La, Ce, Pr, Nd, Pm, Sm, Eu, Gd, Tb, Dy, Ho, Er, Tm, Yb, or Lu.

15. The coated article according to claim 13, wherein said agglomerated particles (100) comprise a material selected from rare earth monosilicates (RE₂SiO₅), rare earth disilicates (RE₂Si₂O₇), rare earth phosphates (REPO₄), or any combination thereof, wherein RE is Sc, Y, La, Ce, Pr, Nd, Pm, Sm, Eu, Gd, Tb, Dy, Ho, Er, Tm, Yb, or Lu, optionally wherein said agglomerated particles (100) further comprise a dislocator material (80; 120) and/or a pore forming material (80; 130).
